(19) Europäisches Patentamt
European Patent Office
Office européen des brevets

(11) Numéro de publication: **0 407 301 A1**

(12) **DEMANDE DE BREVET EUROPEEN**

(21) Numéro de dépôt: **90401945.2**

(22) Date de dépôt: **05.07.90**

(51) Int. Cl.5: **C11D 17/04**, C08J 5/18, C08L 29/04

(30) Priorité: **05.07.89 FR 8909059**

(43) Date de publication de la demande: **09.01.91 Bulletin 91/02**

(84) Etats contractants désignés: **AT BE CH DE DK ES FR GB GR IT LI LU NL SE**

(71) Demandeur: **Le Nigen, Norbert Claude**
**14, Rue des Saussaies**
**F-75008 Paris(FR)**

(72) Inventeur: **Le Nigen, Norbert Claude**
**14, Rue des Saussaies**
**F-75008 Paris(FR)**

(74) Mandataire: **Gillard, Marie-Louise et al**
**Cabinet Beau de Loménie 55, Rue d'Amsterdam**
**F-75008 Paris(FR)**

# (54) Film d'alcool polyvinylique ayant des caractéristiques améliorées de solubilité.

(57) La présente invention a pour objet un film d'alcool polyvinylique ayant des caractéristiques améliorées de solubilité dans les solutions de borates et de perborates. Ce film est essentiellement composé soit d'un polymère d'alcool polyvinylique contenant 80 à 92 % en mole d'alcool polyvinylique, soit d'un copolymère d'alcool polyvinylique et d'acide acrylique contenant 30 à 95 % en mole d'alcool polyvinylique, et comprend 1 à 20 % en poids d'un agent hydrotrope sulfoné.

EP 0 407 301 A1

## FILM D'ALCOOL POLYVINYLIQUE AYANT DES CARACTÉRISTIQUES AMÉLIORÉES DE SOLUBILITÉ.

La présente invention a pour objet un film d'alcool polyvinylique ayant des caractéristiques améliorées de solubilité dans l'eau, notamment en présence d'ions borate et perborate.

Les films d'alcool polyvinylique sont préparés selon des procédés classiques de fabrication de films à partir de résines d'alcool polyvinylique constituées :

- soit d'un polymère d'alcool polyvinylique obtenu à partir de l'hydrolyse partielle de l'acétate de polyvinyle, ce polymère étant constitué d'unités de formules :

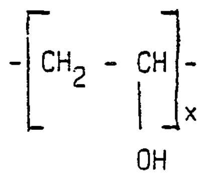

et

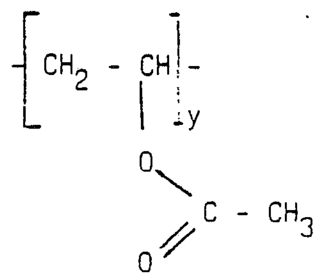

et dont le rapport $\frac{x}{x+y}$

exprimé en % molaire est compris entre 80 % et 92 %;

- soit d'un copolymere hydrosoluble d'alcool polyvinylique et d'acide acrylique constitué d'unités de formules :

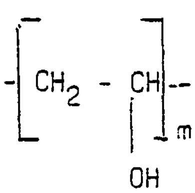

et

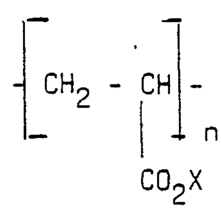

où X = H, Na, K, $NH_4$ ou une alcanolamine en $C_1$-$C_6$ et dont le rapport $\frac{m}{m+n}$

exprimé en % molaire est compris entre 30 % et 95 % ;

lesdits polymères pouvant être dans les deux cas partiellement réticulés ou non.

Dans le cas d'une résine constituée d'un polymère d'alcool polyvinylique obtenu à partir de l'hydrolyse partielle de l'acétate de polyvinyle, le rapport $\frac{x}{x+y}$

exprime en % molaire qui définit ledit polymère d'alcool polyvinylique correspond au taux d'hydrolyse de l'acétate de polyvinyle. L'acétate de polyvinyle est obtenu par polymérisation de l'acétate de vinyle, lui-même obtenu par action de l'acide acétique sur l'acétylène.

Le taux d'acétate de polyvinyle dans le film peut être déterminé par le degré d'hydrolyse selon des moyens connus de l'homme de métier. Au sujet des procédés de fabrication des films d'alcool polyvinylique, on peut se référer notamment à l'ouvrage général intitulé "Polyvinyl alcohol, properties and applications" édité par C.A. FINCH publié par John WILEY and Sons Ltd., Interscience Publication 1973.

Dans le cas d'une résine constituée d'un copolymère hydrosoluble d'alcool polyvinylique et d'acide acrylique, lorsque X représente une alcanolamine en $C_1$-$C_6$, celle-ci peut être avantageusement choisie parmi le groupe constitué par :

l'aminométhylpropanol, la monoéthanolamine, la diéthanolamine, la triéthanolamine, l'isopropanolamine ou l'aminoéthylpropanediol.

Ces films d'alcool polyvinylique , qui sont donc essentiellement composés soit d'un polymère d'alcool polyvinylique contenant 80 à 92 % en mole d'alcool polyvinylique, soit d'un copolymère d'alcool polyvinylique et d'acide acrylique contenant 30 à 95 % en mole d'alcool polyvinylique, conviennent notamment pour fabriquer des sachets-doses de détergents pour le lavage du linge, notamment pour le lavage en machine.

Les détergents contenus dans ces sachets-doses comprennent généralement un agent de blanchiment, tel que notamment le perborate de sodium qui, en solution aqueuse, forme des ions perborate ou des ions borate par décomposition des ions perborate.

Or, on a constaté que la solubilité dans l'eau de ces sachets-doses était réduite en présence d'ions perborate ou borate.

On a déjà proposé d'améliorer la solubilité dans l'eau en présence d'ions perborate de ces sachets-doses en incorporant dans le film d'alcool polyvinylique, en plus de l'agent plastifiant tel qu'un polyéthylène glycol, un composé polyhydroxylé ayant une constante de liaison avec le perborate en solution aqueuse à 25 °C supérieure à 800 $M^{-2}$ ou un acide organique possédant une constante de dissociation dans l'eau à 25 °C supérieure à $10^{-9}$ M. A cet effet, on peut se référer au brevet US 4.626.372 qui décrit ce type de film.

On a maintenant trouvé que l'on peut améliorer les caractéristiques de solubilité dans l'eau des films d'alcool polyvinylique, notamment en présence d'ions perborate ou borate en incorporant dans la résine d'alcool polyvinylique 1 à 20 % en poids d'un composé hydrotrope sulfoné, et à former le film selon un procédé classique.

Les agents hydrotropes sulfonés qui conviennent particulièrement bien aux fins de l'invention sont les hydrotropes sulfonés comprenant un noyau benzénique éventuellement substitué par un ou plusieurs alkyle en $C_1$-$C_4$, notamment les toluène-, cumène- ou xylène-sulfonates de sodium, de potassium ou d'ammonium.

L'incorporation de l'hydrotrope se fait de manière classique avant la formation du film comme l'incorporation de tout autre additif.

Ainsi, le procédé pour l'obtention du film d'alcool polyvinylique selon l'invention consiste à :

1) préparer une résine constituée :

- soit d'un polymère d'alcool polyvinylique obtenu à partir de l'hydrolyse partielle de l'acétate de polyvinyle, ce polymère étant constitué d'unités de formules :

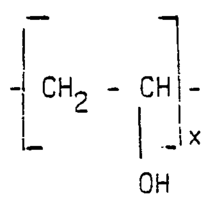

et

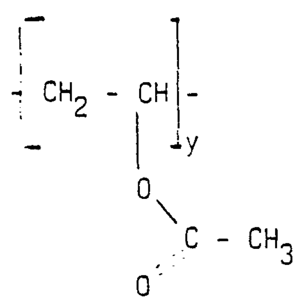

et dont le rapport $\frac{x}{x+y}$

exprimé en % molaire est compris entre 80 % et 92 % ;

- soit d'un copolymère hydrosoluble d'alcool polyvinylique et d'acide acrylique, constitué d'unités de formules :

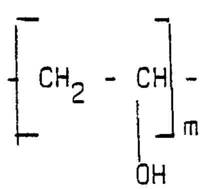

et

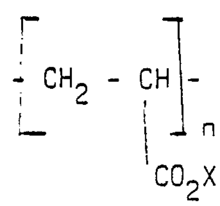

où X = H, Na, K, $NH_4$ ou une alcanolamine en $C_1$-$C_6$ et dont le rapport $\frac{m}{m+n}$

exprimé en % molaire est compris entre 30 % et 95 % ;

lesdits polymères pouvant être dans les deux cas partiellement réticulés ou non.

2) à ajouter à la résine ainsi obtenue dont le poids moléculaire moyen est compris entre 10000 et 70000, de préférence de 15000 à 30000, l'agent hydrotrope en même temps que les additifs classiques, tels

que les plastifiants, tensio-actifs, lubrifiants etc ;

3) à former le film selon des moyens classiques.

On notera que le temps d'ouverture du film en milieu aqueux et en présence d'ions perborate, du film d'alcool polyvinylique selon l'invention comportant 10 % d'un agent hydrotrope sulfoné, est compris entre 9 et 13 secondes alors que le temps d'ouverture du même film dépourvu d'agent hydrotrope n'est que de 23 à 24 secondes dans les mêmes conditions.

L'invention va être maintenant illustrée plus en détail par les essais ci-après dans lesquels la solubilité des films d'alcool polyvinylique est déterminée par le test suivant :

Ce test de solubilité consiste à mesurer le temps nécessaire à un cylindre métallique aux bords arrondis de poids connu (1,5 g) pour traverser un film hydrosoluble tendu au contact de l'eau. Selon ce test, on introduit le cylindre dans un bécher ayant un diamètre de 42 mm et on ferme celui-ci à l'aide d'un échantillon de film dont on veut déterminer la solubilité, en maintenant le film tendu (sans étirement) à l'aide d'un élastique. On retourne ensuite le bécher et on amène le cylindre au contact de l'échantillon à tester, et on met ce dernier au contact, en affleurant la surface, de l'eau contenue dans un récipient, dont on connaît la température. On mesure alors le temps nécessaire pour que le cylindre tombe au fond du récipient dont la hauteur d'eau est de 10 cm.

Les films en alcool polyvinylique utilisés dans ces tests sont des films connus sous la dénomination commerciale MONO-SOL 8-0015-3 vendus par The MONO-SOL DIVISION of CHRIS-CRAFT INDUSTRIAL PRODUCTS INC. ; la teneur en acétate de polyvinyle de ces films est comprise entre 9 et 11 % en mole ; ces films sont dénommés ci-après films PVA.

Essai 1 : Solubilité des films PVA dans l'eau, en présence ou non d'ions perborate, et en fonction de la température.

La solubilité moyenne du film PVA dans l'eau à 20 °C selon le test défini ci-dessus (répété 15 fois) est de 23 secondes.

La solubilité dans l'eau du même film PVA est affectée par la présence d'ions perborate et la température, comme le montrent les résultats du tableau I ci-après où figurent les temps d'ouverture moyens obtenus après 5 répétitions du test.

Essai 2 : Solubilité des films PVA auxquels on a ajouté un agent hydrotrope.

Dans cet essai, on a intégré au film PVA un agent hydrotrope, ou à titre de comparaison un autre additif, et on a vérifié l'incidence de cette addition sur la solubilité du film obtenu dans une solution de perborate de Na monohydraté à 1g/l à 20 °C par rapport au même film PVA non reconstitué (film TEMOIN) et au film PVA reconstitué.

A cet effet, on a dissous 1,36 g de film PVA dans 140 ml d'eau distillée avec ou sans additif selon le cas à 50-60 °C. On a agité en chauffant pour obtenir une parfaite homogénéisation et on a reconstitué le film en répartissant 20 ml de la solution obtenue par boîte de Pétri. Après évaporation pendant 16 à 20 heures, à la température de 60 °C, on obtient ainsi un film de 38 µm d'épaisseur compte tenu des dimensions de la boîte de Pétri avec un rendement en poids de 90 à 99 %. On a répété l'essai 6 fois pour chaque agent hydrotrope ou additif et noté dans le tableau II ci-après, la moyenne du temps d'ouverture dans de l'eau à 20 °C contenant 1g/l de perborate de sodium monohydraté ; les films A, B et C sont respectivement :

film A : film PVA de départ ou film non reconstitué (film TEMOIN) ;

film B : film PVA reconstitué ;

film C : film PVA reconstitué et comportant un additif ou un agent hydrotrope.

Les résultats du Tableau II montrent que seuls les agents hydrotropes sulfonés permettent d'améliorer la solubilité dans l'eau des films PVA. Par contre la triéthanolamine, qui est également un agent hydrotrope, affecte la solubilité du film PVA au lieu de l'améliorer.

D'autre part, aucune amélioration significative n'est obtenue avec le diméthylformamide (solvant du film PVA), l'acétate de sodium (agent de gonflement du film PVA) ou l'huile de ricin éthoxylée (agent dispersant) seulement une légère amélioration est obtenue avec le polyéthylèneglycol de poids moléculaire compris entre 200 et 400, qui est un plastifiant du film PVA.

Les résultats du tableau II font ressortir l'intérêt de l'utilisation d'un agent hydrotrope sulfoné dans les films PVA.

TABLEAU I

| CONCENTRATIONS EN PERBORATE Na MONOHYDRATE | 0,5 g/litre | | | | 1 g/litre | | | | 1,5 g/litre | | | | 2 g/litre | | | |
|---|---|---|---|---|---|---|---|---|---|---|---|---|---|---|---|---|
| FILM / t °C | 10°C | 20°C | 30°C | 40°C | 10°C | 20°C | 30°C | 40°C | 10°C | 20°C | 30°C | 40°C | 10°C | 20°C | 30°C | 40°C |
| MONO-SOL 8-0015-3 | 33" | 24" | 15" | 10" | 1'06" | 48" | 21" | 10" | 3'06" | 1'06" | 33" | 14" | 5'04" | 1'01" | 34" | 24" |

TABLEAU II

Solubilité des films PVA
dans de l'eau contenant 1 g/l de perborate de Na monohydraté.

| Additif (quantité en % en poids) \ Film PVA | A | B | C |
|---|---|---|---|
| Cumène sulfonate de Na (10 %) | 27 s | 28 s | 13 s |
| Toluène sulfonate de K (10 %) | 24 s | 21 s | 10 s |
| Xylène sulfonate de K (10 %) | 24 s | 20 s | 10 s |
| Triéthanolamine (10 %) | 23 s | 26 s | 1 min. 06 |
| Diméthylformamide (10 %) | 20 s | 30 s | 27 s |
| Acétate de Na (10 %) | 23 s | 28 s | 22 s |
| Polyéthylène glycol PEG 400 (10 %) | 22 s | 24 s | 15 s |
| PEG 400 (20 %) | 26 s | 27 s | 20 s |
| PEG 200 (10 %) | 26 s | 24 s | 20 s |
| Huile de ricin éthoxylée (dispersant) (10 %) | 26 s | 23 s | 28 s |
| TWEEN 60 (10 %) | 23 s | 26 s | 40 s |

## Revendications

1. Film hydrosoluble d'alcool polyvinylique ayant des caractéristiques améliorées de solubilité dans l'eau, notamment en présence d'ions borate ou perborate, essentiellement composé soit d'un polymère d'alcool polyvinylique contenant 80 à 92 % en mole d'alcool polyvinylique, soit d'un copolymère hydrosoluble d'alcool polyvinylique et d'acide acrylique contenant 30 à 95 % en mole d'alcool polyvinylique, caractérisé en ce qu'il comprend 1 à 20 % en poids d'un agent hydrotrope sulfoné.

2. Film hydrosoluble selon la revendication 1, essentiellement composé

- soit d'un polymère d'alcool polyvinylique obtenu à partir de l'hydrolyse partielle de l'acétate de polyvinyle, ce polymère étant constitué d'unités de formule :

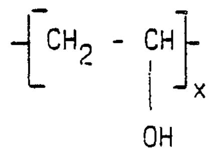

et

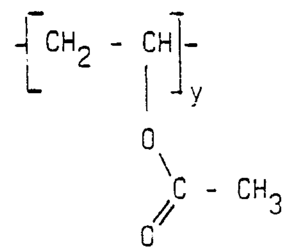

et dont le rapport $\frac{x}{x+y}$

exprimé en % molaire est compris entre 80 % et 92 %, partiellement réticulé ou non;

- soit d'un copolymère hydrosoluble d'alcool polyvinylique et d'acide acrylique constitué d'unités de formule :

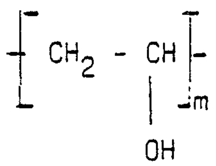

et

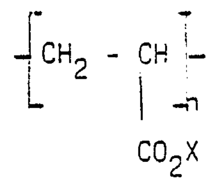

où X = H, Na, K, $NH_4$ ou une alcanolamine en $C_1$-$C_6$ et dont le rapport $\frac{m}{m+n}$

exprimé en % molaire est compris entre 30% et 95%, partiellement réticulé ou non ;

caractérisé en ce qu'il comprend 1 à 20 % en poids d'un agent hydrotrope sulfoné.

3. Film selon l'une quelconque des revendications 1 ou 2 caractérisé en ce que l'agent hydrotrope sulfoné contient un noyau benzénique éventuellement substitué par un ou plusieurs groupes alkyle en $C_1$-$C_4$.

4. Film selon l'une quelconque des revendications 1 à 3, caractérisé en ce que l'agent hydrotrope sulfoné est choisi parmi les toluène-, cumène- ou xylène-sulfonates de sodium, de potassium ou d'ammonium.

Office européen des brevets

# RAPPORT DE RECHERCHE EUROPEENNE

Numero de la demande

EP 90 40 1945

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 079 712 (THE CLOROX CO.) | | C 11 D 17/04<br>C 08 J 5/18<br>C 08 L 29/04 |
| A | EP-A-0 284 334 (THE CLOROX CO.) | | |
| A | EP-A-0 291 198 (THE CLOROX CO.) | | |
| | | | DOMAINES TECHNIQUES RECHERCHES (Int. Cl.5) |
| | | | C 11 D<br>C 08 J |

Le présent rapport a été établi pour toutes les revendications

| Lieu de la recherche | Date d'achèvement de la recherche | Examinateur |
|---|---|---|
| LA HAYE | 25-09-1990 | VAN GOETHEM G.A.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant